# EUROPEAN PATENT APPLICATION

(11) **EP 4 799 774 A1**
(43) Date of publication of application: **02.09.2026**
(21) Application number: 24882142.3
(22) Date of filing: 07.10.2024
(51) Int. Cl.: B25J 13/00

(54) **ROBOT MECHANISM**

(30) Priority: 26.10.2023 JP 2023183836
(71) Applicant: Hitachi High-Tech Corporation, Minato-ku Tokyo 105-6409 (JP)
(72) Inventor: UJIHIRA, Yuto, Tokyo 105-6409 (JP); ONO, Shiano, Tokyo 105-6409 (JP); KAMADA, Shoichiro, Tokyo 105-6409 (JP)
(74) Representative: MERH-IP Matias Erny Reichl Hoffmann Patentanwälte PartG mbB
(86) International application number: PCT/JP2024/035833
(87) International publication number: WO 2025/089025

(57) **Abstract**

A robot mechanism is provided which is capable of suppressing restriction on a motion of a robot arm by a cable. In order to achieve the above, the robot mechanism is used which includes: a first robot arm supported by a supporting member and having a joint; a second robot arm supported by the supporting member; an end device mounted at a tip part of the first robot arm; a cable disposed along the second robot arm and connected to the end device via the tip part of the second robot arm; and a control unit controlling a motion of the tip part of the second robot arm in accordance with a motion of the first robot arm.

## Description

### Technical Field

This invention relates to a robot mechanism.

### Background Art

In recent years, for the purpose of automatization and increase in efficiency of work, introduction of a robot mechanism including a robot arm is being promoted. A light source, a camera, or another tool can be freely attached to the tip of a robot arm. Consequently, various works can be performed efficiently in place of a human hand. At present, power is supplied to a light source, a camera, or the like attached to the tip of a robot arm, or a cable for inputting/outputting an electric signal is connected so as to be along a robot arm.

Patent Literature 1 (Japanese Unexamined Patent Application Publication No. 2018-79514) describes an example of holding a cable by two robot arms.

### Citation List

### Patent Literature

Patent Literature 1: Japanese Unexamined Patent Application Publication No. 2018-79514

### Summary of Invention

### Technical Problem

In an automatic inspection/assembly device, an adjustment work to prevent a contact between a cable and a robot arm as described above or an object to be inspected/assembled has to be performed prior to automatic inspection/assembly. In the case where the adjustment work is not performed sufficiently, there are a risk that the motion of a robot arm is hindered, a risk that a cable is disconnected, a risk that a cable comes into contact with an object to be inspected/assembled, and the like.

An object of the present invention is to provide a robot mechanism capable of suppressing restriction on an operation by a cable without performing the above-mentioned adjustment work.

Other objects and novel features will be apparent from the description of the present specification and accompanying drawings.

### Solution to Problem

Among this disclosure, a typical one of summary is briefly described as follows.

A robot mechanism according to one embodiment includes: a first robot arm supported by a supporting member and having a joint; a second robot arm supported by the supporting member; an end device mounted at a tip part of the first robot arm; a cable disposed along the second robot arm and connected to the end device via the tip part of the second robot arm; and a control unit controlling a motion of the tip part of the second robot arm in accordance with a motion of the first robot arm. Advantageous Effects of Invention

An effect obtained by representative one of inventions disclosed in the application will be briefly described as follows.

According to the present invention, a robot mechanism is provided which is capable of suppressing restriction on a motion of the robot arm by the cable.

### Brief Description of Drawings

FIG. 1 is a schematic diagram illustrating a general configuration of an automatic inspection device.
FIG. 2 is a schematic diagram illustrating a general configuration of an automatic inspection device according to a first modification.
FIG. 3 is a schematic diagram illustrating a general configuration of an automatic inspection device according to a second modification.
FIG. 4 is a schematic diagram illustrating a general configuration of an automatic inspection device according to a third modification.
FIG. 5 is a schematic diagram illustrating a general configuration of an automatic inspection device according to a fourth modification.

### Description of Embodiments

Hereinbelow, preferred embodiments of the present invention will be described in accordance with the accompanying drawings. It should be noted that in the all of accompanying drawings, constituting elements having the same function are indicated by the same reference numerals, and the overlapped description is thus omitted. In the following embodiments, unless otherwise necessary, description of the same or similar parts will not be repeated as a rule. In the drawings for describing the embodiments, to facilitate understanding of the configurations, hatching may be made even in a plan view, a perspective view, or the like. Further, in the drawings for describing the embodiments, to facilitate understanding of the configurations, hatching may be omitted in a cross section.

### <Details of Room for Improvement>

In a site of inspecting/assembling a device, for the purpose of automatization and increase in efficiency of work, an automatic inspection/assembly technique using a robot arm is being applied. Since a power source cable for making a robot arm operate is wired in the robot arm and power is supplied, it is not influenced by a motion of the robot arm, and such a power source cable does not limit the influence on the operation of the robot arm.

However, there is a case where a cable which supplies power to a light source, a camera, or another tool attached at the tip of a robot arm, or inputs/outputs an electric signal cannot be wired in the robot arm and is disposed on the outside of the robot arm.

In this case, when the cable is disposed along the robot arm and the cable length is too short, there is the possibility that the cable is broken due to excessive stretching, bending, or compressing which is brought about by a motion of the robot arm. Therefore, the cable length has to be assured to be longer than the robot arm length, and the cable has to be disposed with a proper cable deformation amount (slack) on the robot arm.

On the other hand, when the cable length is too long, slack of the cable becomes large, and it is feared that the cable and the robot arm or an inspection/assembly target come into contact. When the cable is caught by the robot arm, the inspection/assembly target, or the like, the cable may be broken, or the robot arm or the inspection/assembly target may be damaged. Therefore, in the case of disposing a cable on the outside of a robot arm, the cable length has to be adjusted to properly manage a slack.

As a method of preventing a cable from sandwiching a robot arm and preventing a cable from catching an inspection/assembly target, there may be a method of fixing a cable to a robot arm by using a jig for cable fixing, and adjusting the cable length by using a reel. This method, however, has a problem such that there is a risk that the cable is sandwiched when the joint of the robot arm is turned, and the tension of the reel has to be adjusted according to the kind of the cable. As another method, a cableless method in which all of power supply or data communication by a cable is compensated by wireless communication, and no cable is disposed on the outside of a robot arm may be considered. However, in the case where a power supply amount and a data communication amount are very large, insufficiency is anticipated only by wireless communication, and there is also a problem that enormous cost is required for introduction of communication equipment.

As described above, in a robot mechanism having a cable connected to a tip part of a robot arm, there is room for improvement in suppressing restriction on a motion of the robot arm by the cable.

In the following embodiment, a device to solve the above-described room for improvement is made. Hereinafter, the technical idea in the embodiment in which this device is made will be described.

### <Embodiment>

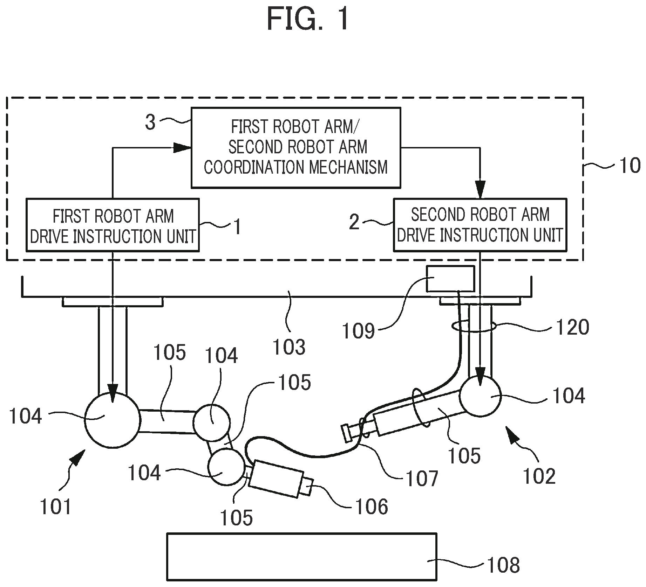

Outline of an automatic inspection device as an example of a robot mechanism will be described. FIG. 1 is a schematic diagram illustrating a configuration of an automatic inspection device having a robot mechanism of an embodiment.

As illustrated in FIG. 1, a first robot arm 101 and a second robot arm 102 are supported by a supporting member 103, and each of the arms has at least one joint 104 and at least one arm 105 between the end part on the supporting member side and the tip part. In this case, the first robot arm 101 and the second robot arm 102 are fixed to the supporting member 103. Although FIG. 1 illustrates a mode that the first robot arm 101 has three joints 104 and the second robot arm 102 has one joint 104, the number of joints 104 is not limited to one but may be plural. By providing the second robot arm 102 with the joint, the degree of freedom in the motion of the second robot arm 102 increases, and it also increases the degree of freedom in the motion of the first robot arm 101. A joint in the specification is a rotation mechanism provided between two arms of one robot arm and refers to a part which enables one of the two arms rotate the other.

An end device (end factor) 106 as a detection unit for detecting a target (inspection target 108) is connected at the tip part of the first robot arm 101. In this case, an inspection unit is used as the end device 106. That is, the end device 106 is used to perform inspection process on a target. To the end device 106, a cable 107 as an electric insulated wire which supplies power to the end device 106 is connected. The cable 107 is connected to a power source 109 via the second robot arm 102. That is, the cable 107 is disposed along the second robot arm 102 from the power source 109, and is connected to the end device 106 via the tip part of the second robot arm 102.

Each of a plurality of parts in the cable 107 is fixed to the arm 105 by, for example, a band 120. The joints 104 of the first robot arm 101 are rotatable. By turning them in arbitrary directions, the arms 105 and the end device 106 of the first robot arm 101 can be freely moved. The joint 104 of the second robot arm 102 is rotatable. By turning it in an arbitrary direction, the arm 105 and the tip part of the second robot arm 102 can be freely moved.

Each of the first robot arm 101 and the second robot arm 102 is connected to a control unit 10. The control unit 10 has a first robot arm drive instruction unit 1, a second robot arm drive instruction unit 2, and a first robot arm/second robot arm coordination mechanism 3. The first robot arm/second robot arm coordination mechanism 3 is a mechanism for making the first robot arm drive instruction unit 1 and the second robot arm drive instruction unit 2 synchronize with each other and move in a coordinated manner. The precision of synchronization required varies depending on the speed of a motion or the like of the first robot arm 101.

The control unit 10 transmits a signal of a motion instruction from the first robot arm drive instruction unit 1 to the first robot arm 101 to rotate the joints 104, thereby moving the first robot arm 101. When the first robot arm 101 is moved, the control unit 10 detects a motion amount of the first robot arm 101. On the basis of the motion amount detected, the control unit 10 determines a motion of the second robot arm 102 to synchronize the second robot arm 102 with the first robot arm 101. The determination is made by the first robot arm/second robot arm coordination mechanism 3. Subsequently, the first robot arm/second robot arm coordination mechanism 3 transmits a signal of a motion instruction from the second robot arm drive instruction unit 2 to the second robot arm 102, by which the control unit 10 controls the motion of the second robot arm 102. At this time, the control unit 10 detects the motion amount of the second robot arm 102 as well. In such a manner, the control unit 10 obtains relative position information between the first robot arm 101 and the second robot arm 102.

In this case, the first robot arm drive instruction unit 1 included in the control unit 10 controls the angles of the joints 104 of the first robot arm 101 and the second robot arm drive instruction unit 2 included in the control unit 10 controls the angle of the joint 104 of the second robot arm 102 so as to maintain a certain distance between the tip part of the first robot arm 101 and the tip part of the second robot arm 102. In the case where the motion amount detected by the control unit 10 is considerably large and a motion by which the distance between the tip part of the first robot arm 101 and the tip part of the second robot arm 102 cannot be maintained to be within a predetermined range is instructed, the control unit 10 stops the motion of each of the first robot arm 101 and the second robot arm 102, and displays a warning on a display unit (not illustrated) connected to the control unit.

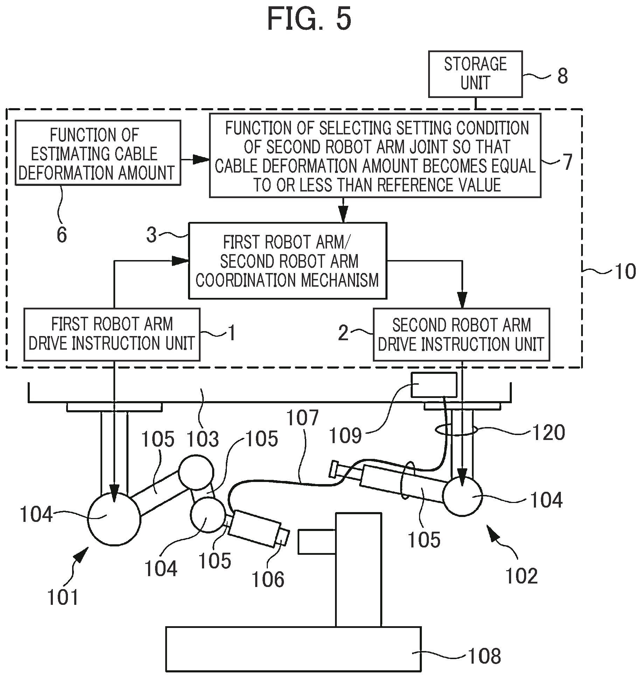

The angle of the joint 104 is detected by the control unit 10 by using, for example, an encoder. An encoder is a device for detecting the position (angle) of the rotary shaft of a motor. When there is an encoder, the control unit 10 can recognize an amount and a direction of a motion of a robot arm. For example, in an optical encoder, a disc is attached to the rotary shaft of a motor, slits through which light passes are regularly provided in the disc, and a light emitting diode and a light receiving element (photodiode) determining intensity of light are disposed in positions sandwiching the slits. The control unit 10 can detect the rotation angle in the joint 104 on the basis of the rotation direction of the motor and the number of times of light reception by the light receiving element through the slits. A signal cable for transmitting a signal between the control unit 10 and the joints 104 and a power source cable for moving the joints 104 are provided in the tip part of the first robot arm 101 and each of the arms 105 of the second robot arm 102. The control unit 10 stores the lengths of the arms 105 in a storage unit (refer to a storage unit 8 in FIG. 5) connected to the control unit 10. Based on the lengths of the arms 105 and the angles of the joints 104, the control unit 10 can calculate and recognize the position of the tip part of each of the first robot arm 101 and the second robot arm 102.

In order to maintain a certain distance between the tip part of the first robot arm 101 and the tip part of the second robot arm 102, for example, the storage unit stores a distance as a reference, and the control unit 10 controls the position of the tip part of the second robot arm 102 so that the distance between the tip part of the first robot arm 101 and the tip part of the second robot arm 102 lies within a predetermined range (for example, ± several tens centimeters) from the reference distance.

In order to maintain a certain distance between the tip part of the first robot arm 101 and the tip part of the second robot arm 102, for example, the storage unit stores the upper and lower limits of the distance, and the position of the tip part of the second robot arm 102 is controlled so that the distance is not out of the range of the upper and lower limits.

In the range of the certain distance as described above, the lower limit is determined in consideration of a length such that excessive tension is not applied to the cable 107, and the upper limit is determined in consideration of a length such that the cable 107 is not too long and not caught by another part.

Although the case where the cable 107 is connected to the power source 109 has been described, the cable 107 may be connected to any control unit such as a computer system, not the power source 109. That is, the cable 107 may be a signal cable used to transmit a signal for performing a process such as an inspection by the end device 106.

Although the embodiment in an automatic inspection has been described, the robot mechanism according to the present invention is not limited to the use of an automatic inspection but may be used for a purpose of image capturing, processing, assembly, welding, painting, sortation, conveyance, or the like. According to the purpose, an end device of the first robot arm for performing a process of inspection, image capturing, processing, assembly, welding, painting, sortation, conveyance, or the like is used.

Although the first robot arm 101 and the second robot arm 102 are hung from the supporting member 103 in FIG. 1, those robot arms and the inspection target 108 may be disposed on/above the supporting member 103.

### <Effects of Embodiment>

In the robot mechanism of the embodiment, the control unit capable of controlling the motion of the tip of the first robot arm is provided. According to the motion of the tip part of the first robot arm, the control unit controls the position of the tip part of another second robot arm holding a cable which extends from the end device of the first robot arm. By controlling the distance between the tip parts of both of the robot arms to be constant (within a predetermined range) by the control unit, the robot mechanism capable of avoiding the cable from coming into contact with an object to be inspected/assembled while preventing breakage of the cable can be provided.

That is, in the embodiment, the configuration that the cable of the end device is not provided along the first robot arm is employed. Consequently, the first robot arm can be freely moved without considering the existence of the cable. The cable can be prevented from sandwiching the first robot arm and catching an object to be inspected/assembled.

Since the position and the posture of the tip part of the first robot arm can be controlled without being influenced by the cable, no problem occurs even when there are a number of combinations of angles of the joints for realizing the position and the posture of the tip part of the first robot arm. That is, redundancy can be assured. By assuring redundancy, a path among route points of the tip part of the first robot arm can be freely selected, and a motion program of the first robot arm can be simplified.

Since it becomes unnecessary to consider the shape of the cable which is disposed along the first robot arm, a work of adjusting the cable length and managing slack is saved. That is, time required for a motion setting and a motion verification of the first robot arm can be shortened.

As described above, according to the embodiment, the robot mechanism capable of suppressing constraints on the motion of a robot arm imposed by a cable can be provided.

### <Modification 1>

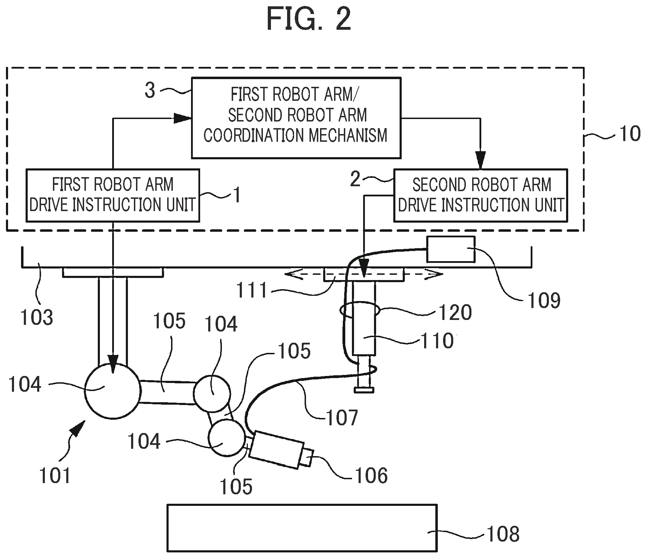

FIG. 2 is a schematic diagram illustrating a configuration in which the second robot arm 102 in the automatic inspection device of FIG. 1 is changed to a single-axis robot 110 and a single-axis slider 111. The single-axis slider 111 is a connection part for connecting the single-axis robot 110 as a second robot arm to the supporting member 103. The first robot arm 101 is fixed to the single-axis slider 111, and the single-axis slider 111 is supported by the supporting member 103 so as to be slidable in one direction. That is, the single-axis robot 110 and the single-axis slider 111 slide only in a single axis direction along the plane of the supporting member 103 by which the single-axis slider 111 is supported. The single-axis slider 111 slides, for example, along a rail provided for the supporting member 103. The single-axis robot 110 does not have a joint.

In the modification, when the first robot arm 101 is moved, the control unit 10 detects a motion amount of the first robot arm 101. The control unit 10 controls the position of the single-axis slider 111 in accordance with the detected motion amount. Specifically, the first robot arm drive instruction unit 1 included in the control unit 10 instructs the angles of the joints 104 of the first robot arm 101 and the second robot arm drive instruction unit 2 included in the control unit 10 controls the position of the single-axis robot 110 so that the tip part of the first robot arm 101 and the tip part of the single-axis robot 110 keep a certain distance.

In the modification, the effects described by using FIG. 1 can be obtained. In addition, since a simple robot arm having no joint (single-axis robot 110) is used in the modification, redundancy in the first robot arm 101 can be assured. Since the manufacturing cost of the single-axis robot 110 having no joint is low, it also contributes to cost reduction.

### <Modification 2>

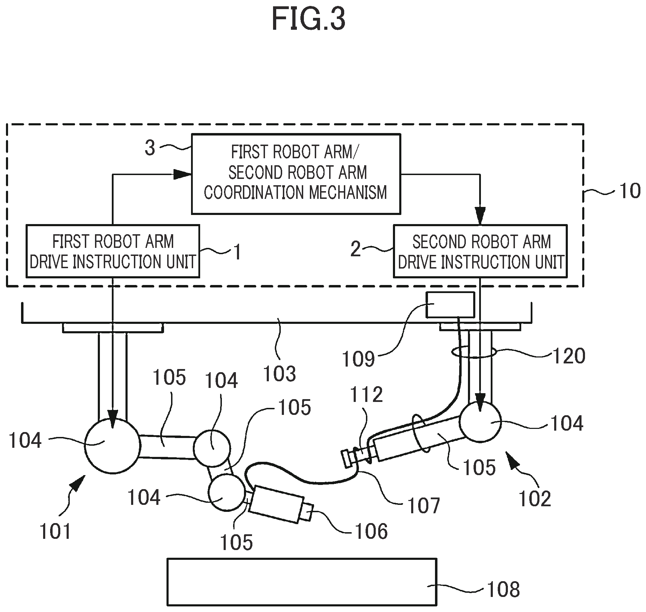

FIG. 3 is a schematic diagram illustrating a configuration obtained by adding a cable reeling mechanism (reeling unit) 112 to the tip part of the second robot arm 102 in the automatic inspection device of FIG. 1. Except for the point that the reeling mechanism 112 is provided, the configuration of the first robot arm 101 and that of the second robot arm 102 are similar to those in FIG. 1.

When the first robot arm 101 is moved, the control unit 10 detects a motion amount of the first robot arm 101. According to the detected motion amount, the control unit 10 controls the motion of the second robot arm 102. Specifically, the first robot arm drive instruction unit 1 included in the control unit 10 instructs the angles of the joints 104 of the first robot arm 101 and the second robot arm drive instruction unit 2 included in the control unit 10 instructs the angle of the joint 104 of the second robot arm 102 so as to maintain a certain distance between the tip part of the first robot arm 101 and the tip part of the second robot arm 102.

Further, the control unit 10 adjusts a reel-in amount and a reel-out amount of a cable by the cable reeling mechanism 112. In the case where the tip part of the first robot arm 101 and the tip part of the second robot arm 102 are apart from each other, to increase the length of the cable 107 between the end device 106 and the cable reeling mechanism 112, the cable 107 is unreeled by using the cable reeling mechanism 112. In the case where the tip part of the first robot arm 101 and the tip part of the second robot arm 102 are close, the cable is reeled by using the cable reeling mechanism 112 in order to shorten the length of the cable 107.

To prevent slack of the cable 107 from becoming out of a predetermined range by the operation, the first robot arm/second robot arm coordination mechanism 3 included in the control unit 10 performs adjustment. In this modification, in addition to the effects described by using FIG. 1, the reel-out amount (reel-in amount) of the cable by the cable reeling mechanism 112 can be adjusted. Consequently, the degree of freedom of the distance between the tip part of the first robot arm 101 and the tip part of the second robot arm 102 can be increased.

### <Modification 3>

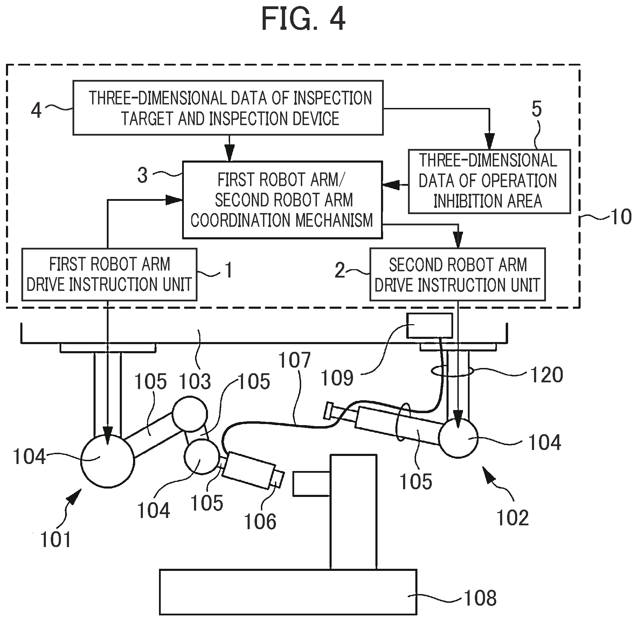

FIG. 4 is a schematic diagram illustrating a configuration obtained by adding three-dimensional data 4 of an inspection target and an inspection device and three-dimensional data 5 of an operation inhibition area to the control unit 10 in the automatic inspection device of FIG. 1. In addition, the inspection target 108 has a three-dimensional projected part. The structure of the first robot arm 101 and that of the second robot arm 102 are similar to those of FIG. 1.

When the first robot arm 101 is moved, the control unit 10 detects a motion amount of the first robot arm 101. According to the detected motion amount, the control unit 10 controls the motion of the second robot arm 102. Specifically, the first robot arm drive instruction unit 1 included in the control unit 10 instructs the angles of the joints 104 of the first robot arm 101 and the second robot arm drive instruction unit 2 included in the control unit 10 instructs the angle of the joint 104 of the second robot arm 102 so as to maintain a certain distance between the tip part of the first robot arm 101 and the tip part of the second robot arm 102.

The control unit 10 includes the three-dimensional data 4 of an inspection target and an inspection device. The three-dimensional data 4 of an inspection target and an inspection device includes at least three-dimensional data of each of the inspection target 108, the first robot arm 101, the second robot arm 102, and the supporting member 103. The control unit 10 generates the three-dimensional data of an area in which at least the joints 104, the arms 105, and the end device 106 of the first robot arm 101 and the joint 104 and the arm 105 of the second robot arm 102 should not exist (hereinafter, called operation inhibition area), that is, the three-dimensional data 5 of the operation inhibition area by using the three-dimensional data 4 of the inspection target and the inspection device, and holds it. The three-dimensional data 4 of the inspection target and the inspection device and the three-dimensional data 5 of the operation inhibition area are stored in, for example, the storage unit.

The control unit 10 gives an instruction so that at least the joints 104, the arms 105, and the end device 106 of the first robot arm 101 and the joint 104 and the arm 105 of the second robot arm 102 do not enter the operation inhibition area. Specifically, the first robot arm drive instruction unit 1 instructs the angles of the joints 104 of the first robot arm 101, and the second robot arm drive instruction unit 2 instructs the angle of the joint 104 of the second robot arm 102.

In the modification, in addition to the effects described by using FIG. 1, the operation inhibition area can be set. Consequently, even in the case where the shape, motion, or the like of an inspection target becomes complicated, generation of a motion program of a robot arm can be handled. By setting an area where the possibility of contact with each robot arm is high such as a side face of an inspection target as the operation inhibition area, contact between a robot arm and an inspection target is prevented, and an inspection can be carried out safely.

### <Modification 4>

FIG. 5 is a schematic diagram illustrating a configuration obtained by adding, to the control unit 10, a function 6 of estimating a cable deformation amount and a function 7 of selecting a setting condition of a second robot arm joint so that the cable deformation amount becomes equal to or less than a reference value, in the automatic inspection device of FIG. 1. To the control unit 10, the storage unit 8 is connected. The structure of the first robot arm 101 and that of the second robot arm 102 are similar to those of FIG. 1.

When the first robot arm 101 is moved, the control unit 10 detects a motion amount of the first robot arm 101. According to the detected motion amount, the control unit 10 controls the motion of the second robot arm 102. Specifically, the first robot arm drive instruction unit 1 included in the control unit 10 instructs the angles of the joints 104 of the first robot arm 101 and the second robot arm drive instruction unit 2 included in the control unit 10 instructs the angle of the joint 104 of the second robot arm 102 so as to maintain a certain distance between the tip part of the first robot arm 101 and the tip part of the second robot arm 102.

In the control unit 10, the length of the cable necessary between the tip part of the first robot arm 101 and the tip part of the second robot arm 102 is estimated based on the position and the posture of the end device 106 at the tip part of the first robot arm 101, and a cable deformation amount (warp amount) is estimated. As described above, the control unit 10 has the function 6 of estimating the cable deformation amount.

The control unit 10 controls the angle of the joint 104 of the second robot arm 102 so that the cable deformation amount becomes equal to or less than the reference value. The storage unit 8 stores a plurality of setting conditions of the joint 104 of the second robot arm 102. Under the control, by the function 7 of selecting a setting condition of the second robot arm joint so that the cable deformation amount becomes equal to or less than the reference value, the control unit 10 selects a setting condition under which the cable deformation amount becomes equal to or less than the reference value from the setting conditions of the joint 104 stored in the storage unit 8, and gives an instruction to the joint 104 of the second robot arm 102.

In the modification, in addition to the effects described by using FIG. 1, the second robot arm 102 can be operated in consideration of the cable deformation amount, so that the motion program of the first robot arm 101 can be set in shorter time.

Although the present invention achieved by the inventors herein has been concretely described based on the embodiments, obviously, the present invention is not limited to the foregoing embodiments but may be variously changed without departing from the gist.

### Industrial Applicability

The present invention can be widely used for a robot mechanism.

### List of Reference Signs

1: first robot arm drive instruction unit
2: second robot arm drive instruction unit
3: first robot arm/second robot arm coordination mechanism
4: three-dimensional data of inspection target and inspection device
5: three-dimensional data of operation inhibition area
6: function of estimating cable deformation amount
7: function of selecting setting condition of second robot arm joint so that cable deformation amount becomes equal to or less than reference value
8: storage unit
10: control unit
101: first robot arm
102: second robot arm
103: supporting member
104: joint
105: arm
106: end device
107: cable
108: inspection target
109: power source
110: single-axis robot
111: single-axis slider
112: cable reeling mechanism
120: band

## Claims

1. A robot mechanism comprising:
a first robot arm supported by a supporting member and having a joint;
a second robot arm supported by the supporting member;
an end device mounted at a tip part of the first robot arm;
a cable disposed along the second robot arm and connected to the end device via the tip part of the second robot arm; and
a control unit controlling a motion of the tip part of the second robot arm in accordance with a motion of the first robot arm.

2. The robot mechanism according to claim 1, wherein
the second robot arm has one or plural joints.

3. The robot mechanism according to claim 1, wherein
the second robot arm and a connection part between the second robot arm and the supporting member are configured to be slidable on the supporting member.

4. The robot mechanism according to claim 3, wherein
the second robot arm is not provided with a joint.

5. The robot mechanism according to claim 1, further comprising
a reel unit which is disposed at a tip part of the second robot arm and reels the cable.

6. The robot mechanism according to claim 1, wherein
the first robot arm processes a target by using the end device, and
the control unit controls a motion of the tip part of the second robot arm on the basis of three-dimensional data of the target and the robot mechanism.

7. The robot mechanism according to claim 1, further comprising
a storage unit which is connected to the control unit, wherein
a plurality of setting conditions of a joint of the second robot arm are stored in the storage unit, and
the control unit selects the setting condition so that a deformation amount of the cable becomes equal to or less than a reference value.
